# EUROPEAN PATENT SPECIFICATION

(11) **EP 4 369 428 B1**
(45) Date of publication and mention of the grant of the patent: **19.02.2025**
(21) Application number: 23189932.9
(22) Date of filing: 07.08.2023
(51) Int. Cl.: H01M 4/04, H01M 4/139, B05D 3/10, F26B 3/04, F26B 13/00, F26B 13/10, F26B 21/00, F26B 21/08, F26B 21/10, F26B 21/12, F26B 25/22, B05D 1/02, B05D 1/26, B05D 3/04

(54) **COATING FILM FORMING METHOD**
VERFAHREN ZUR HERSTELLUNG EINES BESCHICHTUNGSFILMS
PROCÉDÉ DE FORMATION DE FILM DE REVÊTEMENT

(30) Priority: 30.09.2022 JP 2022159103
(43) Date of publication of application: 15.05.2024
(73) Proprietor: FUJIFILM Corporation, Tokyo 106-8620 (JP)
(72) Inventor: KUNIYASU, Satoshi, Minami-ashigara, 250-0193 (JP); SANO, Takayuki, Minami-ashigara, 250-0193 (JP)
(74) Representative: Meissner Bolte Partnerschaft mbB

(56) References cited:
- WO-A1-2018/004595
- WO-A1-2022/055018
- JP-A- 2019 197 650
- KR-A- 20220 030 745

## Description

### BACKGROUND OF THE INVENTION

### 1. Field of the Invention

The present disclosure relates to a coating film forming method.

### 2. Description of the Related Art

The following method has been known as a method for efficiently forming a coating film having a narrow width (for example, a width of 200 mm or less) in a continuous process using a roll-to-roll method.

That is, it is a coating film forming method in which a continuously transported base material having a wide width is coated with a coating liquid in multiple rows, the obtained coating liquid film is dried, and a plurality of coating films are obtained by cutting an uncoated portion between adjacent coating films (that is, an exposed portion of the base material) along the coating film.

As a method using a technique of applying a coating liquid in multiple rows, for example, JP2004-361907A discloses a method for producing a functional element, including a coating liquid applying step of applying a coating liquid for forming a functional layer, which contains a solvent, onto a base material, and a drying step of drying and solidifying the applied coating liquid for forming a functional layer, in which in order to prevent deformation of an end part of the functional layer, the method includes a solvent applying step of applying a solvent on a peripheral part of the functional layer. In addition, in JP2004-361907A, it is disclosed that the functional layer is a striped colored layer formed in a stripe shape, and the solvent applying step is a step of applying the solvent at least on an end part of each stripe of the striped colored layer.

In addition, JP2019-76824A discloses a coating apparatus including a backup roll which transports a web, a main coating device which stripe-coats n pieces of first coated portions on the web, n pieces or 2n pieces of small dies which coat each second coated portion on one side portion or both side portions of the web on the outside of the n pieces of the first coated portions, n pieces or 2n pieces of lateral movement units which respectively move the n pieces or 2n pieces of the small dies in a width direction of the web, a sensor which detects positions of the both side portions of the n pieces of the first coated portions, and a controller, in which the controller moves the small die in a width direction of the lateral movement unit by feedback control so that the small die is positioned at a position of the side portion of the first coated portion detected by the sensor, and the small die is used to apply the second coated portion to the side portion of the first coated portion with a certain spacing, contact, or partially overlap.

KR 2022 0030745 discloses an electrode drying device for drying an electrode using an infrared heater.

WO 2018/004595 Al discloses a method for generating, using a processor, printing instructions of a print job based on a moisture profile of a print medium.

WO 2022/055018 Al discloses an electrode drying device, which comprises: an oven which provides a space where an electrode is dried and includes a hot air nozzle or an infrared heater; a color coordinate measurement unit which is disposed at the outlet of the oven to measure the color coordinate value of an electrode active material layer of the dried electrode; and a control unit which analyzes the drying result of the electrode from the color coordinate value, determines whether the drying of the electrode is defective, and controls conditions under which the electrode is dried.

JP 2019 197650 A discloses an inspection method of an electrode layer of a battery.

### SUMMARY OF THE INVENTION

In the coating film forming method using the technique of applying a coating liquid in multiple rows, smoothness is required for an uncoated portion formed between adjacent coating films, depending on the use of the coating film. However, in a case where the coating liquid film is dried as described above in the coating film forming method, creases may occur in the uncoated portion between adjacent coating films.

Compared to an inner central part in the width direction, both end parts (from both edges to approximately 5 mm) of the coating liquid film in the width direction have a faster rate of increase in concentration of solid contents (that is, faster drying), and curling occurs due to local contraction. In a case where the curling occurs at the both end parts of the coating liquid film in the width direction in this manner, the adjacent uncoated portions are also deformed accordingly, and the deformed portions of the uncoated portions are to be creases in a case where the deformed portions are in contact with a transport roll.

The creases in the uncoated portion occur in the uncoated portion of the base material in a case where a part of the base material has a crease mark or a part of the base material is folded and overlapped, and refer to a trace which continues in the longitudinal direction (also the transport direction) of the base material. Here, the focus is on the creases of the uncoated portion, but the creases are a phenomenon which also occurs in a coated portion.

An object to be achieved by one aspect of the present disclosure has been made in view of the above circumstances, and the object is to provide a coating film forming method which includes forming a plurality of coating liquid films on a base material and drying the coating liquid films to form a plurality of coating films on the base material, in which creases in an uncoated portion, that occur in the process of forming the plurality of coating films on the base material, can be suppressed.

The means for achieving the above-mentioned object include the following embodiments.
<1> A coating film forming method comprising:
   a step A of coating a continuously transported base material with a coating liquid to form a plurality of coating liquid films on the base material; and
   a step B of, in each of the plurality of coating liquid films, applying a solvent contained in the coating liquid on both end parts of a coating liquid film in a width direction in a case where a concentration of solid contents of the both end parts of the coating liquid film in the width direction is higher than a concentration of solid contents of a central part of the coating liquid film in the width direction, so that the concentration of solid contents of the both end parts of the coating liquid film in the width direction is to be equal to or lower than the concentration of solid contents of the central part of the coating liquid film in the width direction.
<2> The coating film forming method according to <1>,
   in which the concentration of solid contents of the both end parts of the coating liquid film in the width direction, after applying the solvent contained in the coating liquid, is 0.8 times or more of a concentration of solid contents of the coating liquid.
<3> The coating film forming method according to <1> or <2>,
   in which, in a case where the concentration of solid contents of the both end parts of the coating liquid film in the width direction reaches 80% by mass to 100% by mass, the solvent contained in the coating liquid is applied on the both end parts of the coating liquid film in the width direction.
<4> The coating film forming method according to any one of <1> to <3>,
   in which the application of the solvent on the both end parts of the coating liquid film in the width direction is performed by spray coating.
<5> The coating film forming method according to any one of <1> to <4>, further comprising:
   a step C of drying the coating liquid films in a state in which, in each of the plurality of coating liquid films, drying points Te at the both end parts of the coating liquid film in the width direction are on a downstream side in a transport direction of the base material, compared with a drying point Tc at the central part of the coating liquid film in the width direction.
<6> The coating film forming method according to any one of <1> to <5>,
   in which the coating liquid is a slurry containing an electrode active material and a conductive auxiliary agent.
<7> The coating film forming method according to <6>,
   in which, in a case where a color density of both end parts of a coating film in a width direction is represented by T and a color density of a central part of the coating film in the width direction is represented by C, a relationship of 0.9 ≤ T/C is satisfied.
<8> The coating film forming method according to <6>,
   in which, in a case where a color density of both end parts of a coating film in a width direction is represented by T and a color density of a central part of the coating film in the width direction is represented by C, a relationship of 0.9 ≤ T/C ≤1.0 is satisfied.
<9> The coating film forming method according to any one of <1> to <8>,
   in which the base material is a base material having a thermal conductivity of 200 W/m·K or more.
<10> The coating film forming method according to any one of <1> to <8>,
   in which the base material is a base material having a thermal conductivity of 200 W/m·K to 500 W/m·K.

According to the aspect of the present disclosure, there is provided a coating film forming method which includes forming a plurality of coating liquid films on a base material and drying the coating liquid films to form a plurality of coating films on the base material, in which creases in an uncoated portion, that occur in the process of forming the plurality of coating films on the base material, can be suppressed.

### BRIEF DESCRIPTION OF THE DRAWINGS

Fig. 1 is a schematic diagram showing an example of each step of the coating film forming method according to the embodiment.
Fig. 2 is a schematic diagram showing another example of each step of the coating film forming method according to the embodiment.
Fig. 3 is a graph for explaining a drying point of a coating liquid film formed on a base material.
Fig. 4 is a top schematic diagram for explaining a plurality of coating liquid films formed on the base material.
Fig. 5 is a schematic diagram of a base material and coating liquid films in a step C in a cross-sectional view in a width direction.

### DESCRIPTION OF THE PREFERRED EMBODIMENTS

Hereinafter, embodiments of the coating film forming method will be described. However, the present invention is not limited to the following embodiments, and can be implemented with appropriate modification within the scope of the object of the present invention.

In the present disclosure, the numerical ranges shown using "to" means ranges including the numerical values described before and after "to" as the minimum value and the maximum value.

Regarding numerical ranges that are described stepwise in the present disclosure, an upper limit value or a lower limit value described in a numerical range may be replaced with an upper limit value or a lower limit value of another stepwise numerical range. In addition, regarding the numerical range described in the present disclosure, an upper limit value or a lower limit value described in a numerical range may be replaced with a value described in Examples.

Each element in each drawing shown in the present disclosure is not necessarily an accurate scale, the main purpose is to clearly show the principle of the present disclosure, and some parts may be emphasized.

In addition, in each drawing, constitutional components having the same function are designated by the same reference numeral, and redundant description will be omitted.

In the present disclosure, the meaning of the term "step" includes not only an independent step but also a step whose intended purpose is achieved even in a case where the step is not clearly distinguished from other steps.

In the present disclosure, "coating liquid film" refers to a film until drying is completed (for example, until a concentration of solid contents reaches 100% by mass), and "coating film" refers to a film after the drying is completed.

In the present disclosure, "width direction" refers to a direction orthogonal to a longitudinal direction of any one of a long base material, a coating liquid film, or a coating film.

In the present disclosure, "both end parts in a width direction" refer to both ends of a coating liquid film or a coating film in the width direction, and refer to an inner region up to 5 mm from a width direction edge portion (specifically, a boundary line between a coated region and an uncoated region described below).

In the present disclosure, "central part in a width direction" refers to a central portion of a coating liquid film or a coating film in the width direction, and refers to a region inside the "both end parts in a width direction" described above.

In the present disclosure, the "width direction edge portion" refers to an edge portion of a coating liquid film or a coating film in the width direction, and in a case where a film surface of the coating liquid film or the coating film is viewed from above, the "width direction edge portion" is visually recognized as a boundary line between a coated region (that is, a portion where the coating liquid film or the coating film is formed) and an uncoated region (that is, an exposed portion of the base material).

In the present disclosure, a combination of two or more preferred forms or aspects is a more preferred form or aspect.

### Coating film forming method

The coating film forming method according to the present embodiment includes a step A of coating a continuously transported base material with a coating liquid to form a plurality of coating liquid films on the base material; and a step B of, in each of the plurality of coating liquid films, applying a solvent contained in the coating liquid on both end parts of a coating liquid film in a width direction in a case where a concentration of solid contents of the both end parts of the coating liquid film in the width direction is higher than a concentration of solid contents of a central part of the coating liquid film in the width direction, so that the concentration of solid contents of the both end parts of the coating liquid film in the width direction is to be equal to or lower than the concentration of solid contents of the central part of the coating liquid film in the width direction. The coating film forming method according to the present embodiment may further include other steps as necessary.

In the above-described coating film forming method including the step of applying the coating liquid in multiple rows and the step of drying the applied coating liquid film, creases may occur in an uncoated portion between adjacent coating films.

As a result of intensive studies on suppression of the creases in the uncoated portion, the present inventors have found that, by applying, at a specific timing, a solvent contained in the coating liquid on both end parts of the coating liquid film in a width direction, where a concentration of solid contents increases quickly, the concentration of solid contents of the both end parts of the coating liquid film in the width direction is lowered, so that it is possible to suppress curling at the both end parts of the coating liquid film in the width direction, and as a result, it is possible to suppress the creases in the uncoated portion.

From the above, with the coating film forming method according to the present embodiment, it is possible to suppress the creases in the uncoated portion between coating films.

Here, in the method disclosed in JP2004-361907A, the solvent is applied on the peripheral part of the coating liquid film, and the solvent is not applied to both end parts of the coating liquid film in the width direction. In addition, the method disclosed in JP2019-76824A is not a method of applying the solvent on the both end parts of the coating liquid film in the width direction.

Hereinafter, each step of the coating film forming method according to the present embodiment will be described.

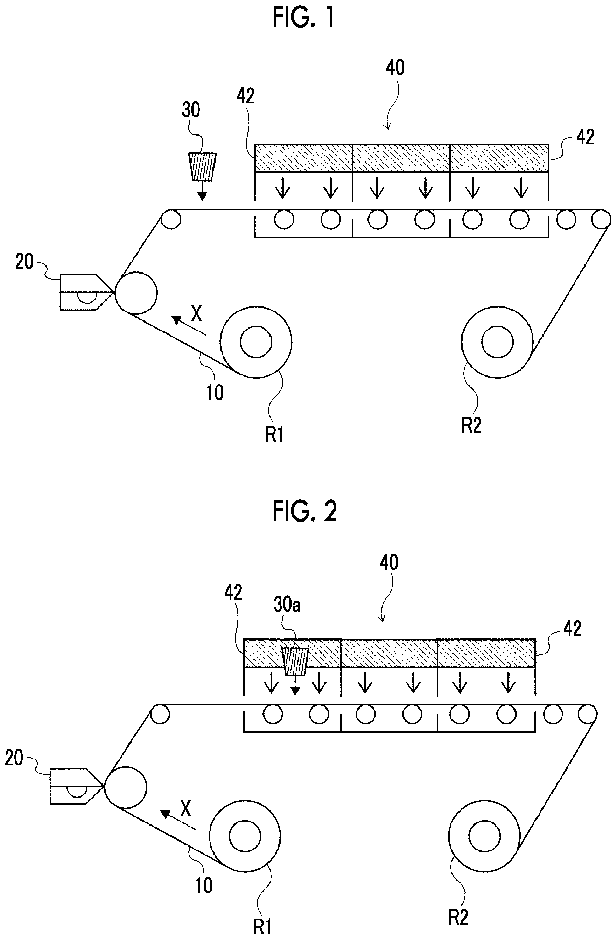

First, an example of the coating film forming method will be described with reference to Fig. 1. Fig. 1 is a schematic diagram showing an example of each step of the coating film forming method according to the embodiment.

As shown in Fig. 1, a distal end of a long base material 10 is sent out from a roll R1 wound in a roll shape, and continuous transport in a X direction is started. In a case where a continuously transported base material 10 reaches an installation position of a coating unit 20, the base material 10 is coated with a plurality of coating liquids by the coating unit 20. As a result, a plurality of coating liquid films of the coating liquid are formed on the long base material 10 (step A).

Subsequently, in each of the plurality of coating liquid films formed on the long base material 10, by an applying unit 30, a solvent contained in the coating liquid is applied on both end parts in the width direction, in a case where a concentration of solid contents of the both end parts of the coating liquid film in the width direction is higher than a concentration of solid contents of a central part of the coating liquid film in the width direction. Accordingly, the concentration of solid contents of the both end parts of the coating liquid film in the width direction is to be equal to or lower than the concentration of solid contents of the central part of the coating liquid film in the width direction (step B).

Subsequently, the plurality of coating liquid films are dried on the base material 10 by continuously transporting the base material 10 having the plurality of coating liquid films formed in the step A into a drying zone 40 (step C). Specifically, in the step C, the coating liquid films are dried in a state in which, in each of the plurality of coating liquid films, drying points Te at the both end parts of the coating liquid film in the width direction are on a downstream side in a transport direction of the base material 10, compared with a drying point Tc at the central part of the coating liquid film in the width direction. In this step C, the plurality of coating liquid films on the long base material 10 are dried to form a plurality of coating films.

Subsequently, the base material 10 on which the plurality of coating films have been formed is wound into a roll shape, and a roll R2 obtained by a laminate of the plurality of coating films and the base material 10 is obtained.

Fig. 1 shows an aspect in which the applying unit 30 for applying the solvent on the both end parts of the coating liquid film in the width direction is installed upstream of the drying zone 40 in the transport direction (that is, X direction) of the base material, but the present disclosure is not limited thereto.

The applying unit for applying the solvent on the both end parts of the coating liquid film in the width direction may be provided in the drying zone 40. Here, Fig. 2 shows a configuration in which an applying unit 30a for applying the solvent on the both end parts of the coating liquid film in the width direction is provided in the drying zone 40. Fig. 2 is a schematic diagram showing another example of each step of the coating film forming method according to the embodiment. In addition, Fig. 2 has the same configuration as that of Fig. 1, except that the installation position of the applying unit for applying the solvent on the both end parts of the coating liquid film in the width direction is changed.

It is desirable that the solvent is applied on a portion where the concentration of solid contents is high (that is, the drying has proceeded) so that the concentration of solid contents of the both end parts of the coating liquid film in the width direction, after applying the solvent, does not decrease too much. From this viewpoint, as shown in Fig. 2, it is preferable that the applying unit 30a for applying the solvent on the both end parts of the coating liquid film in the width direction is provided in the drying zone 40.

### Step A

In the step A, a continuously transported base material is coated with a coating liquid to form a plurality of coating liquid films on the base material.

### -Base material-

The base material used in this step may be selected depending on the use of the coating film, and may also be selected in consideration of applicability to the continuous transport (preferably, applicability to a roll-to-roll method).

A base material having high thermally conductive properties, such as a metal base material, easily affects contraction of the coating liquid film during drying. In the coating film forming method according to the present embodiment, even in a case where the base material having high thermally conductive properties is used, the creases in the uncoated portion can be suppressed.

A resin film may be used as the base material.

Examples of the base material having high thermally conductive properties include a base material having a thermal conductivity of 200 W/m·K or more. For example, in a case where the base material used in this step is a base material having a multilayer structure including a metal foil and a resin film, the base material can be regarded as the base material having a thermal conductivity of 200 W/m·K or more in a case where a thermal conductivity of the base material as a whole is 200 W/m·K or more.

The upper limit value of the thermal conductivity of the base material is not particularly limited and is, for example, 500 W/m·K.

Examples of the base material exhibiting the above-described thermal conductivity include a metal base material. More specifically, examples of the base material exhibiting the above-described thermal conductivity include metal base materials made of copper, aluminum, silver, gold, or an alloy thereof.

In addition, the metal base material may be a base material made of stainless steel, nickel, titanium, or an invar alloy.

Among these, from the viewpoint of shape stability as the base material and usage record, a copper base material or an aluminum base material is preferably used.

The thermal conductivity of the base material is measured as follows.

First, the base material is cut into a size suitable for an apparatus described below to obtain a sample for measurement. A thermal diffusivity in a thickness direction of the obtained sample for measurement is measured by a laser flash method. For example, the measurement can be performed using "LFA467" manufactured by NETZSCH. Next, a specific gravity of the sample for measurement is measured using a balance. For example, the measurement can be performed using a balance "XS204" (using a "solid specific gravity measuring kit") manufactured by METTLER TOLEDO. Furthermore, using "DSC320/6200" manufactured by Seiko Instruments Inc., a specific heat of the sample for measurement at 25°C is measured under a heating condition of 10 °C/min. The obtained thermal diffusivity is multiplied by the specific gravity and the specific heat, thereby calculating the thermal conductivity of the sample for measurement (that is, the base material).

From the viewpoint of applicability to the continuous transport (preferably, applicability to the roll-to-roll method), a Young's modulus of the base material is preferably 1 GPa to 200 GPa, and more preferably 50 GPa to 150 GPa.

Here, the Young's modulus of the base material indicates Young's modulus at 25°C.

The Young's modulus of the base material can be measured by a free resonance type natural vibration method. Specifically, the Young's modulus of the base material is measured, for example, using a free resonance type Young's modulus measuring device (product name: JE-RT) of Nihon Techno-Plus Corp., which adopts the free resonance type natural vibration method.

A thickness of the base material may be appropriately set from the viewpoint of applicability to the continuous transport (preferably, the applicability to the roll-to-roll method).

A thickness of the base material is, for example, preferably 5 µm to 100 µm, more preferably 8 µm to 30 µm, and still more preferably 10 µm to 20 µm.

A width and length of the base material may be appropriately set from the viewpoint of application to the roll-to-roll method and the width and length of a desired coating film.

The thickness of the base material is measured as follows.

That is, using a contact-type thickness measuring device, thicknesses of the base material at three points in the width direction (that is, a position 5 mm from both edge portions in the width direction and a central part in the width direction) are measured at three points with an interval of 500 mm in the longitudinal direction.

The arithmetic average value of the nine measured values is obtained, and this is used as the thickness of the base material.

As the contact-type thickness measuring device, for example, S-2270 of Fujiwork Co., Ltd. is used.

In this step, a transportation speed of the continuously transported base material is not particularly limited.

As the transportation speed of the base material, for example, 0.1 m/min to 100 m/min can be selected, and 0.2 m/min to 20 m/min can be selected.

### -Coating liquid-

As the coating liquid used in this step, a coating liquid capable of forming the desired coating film may be used.

A coating liquid in which a solvent (or a dispersion medium) contained in the coating liquid is substantially water (hereinafter, also referred to as a water-based coating liquid) easily affects the contraction of the coating liquid film during drying. In the coating film forming method according to the present embodiment, even in a case where the water-based coating liquid is used, the creases in the uncoated portion can be suppressed.

Here, in the water-based coating liquid, "a solvent (or a dispersion medium) is substantially water" means that inclusion of a solvent other than the water, which is introduced using the solid content, is allowed, and means that a proportion of the water in all solvents (or all dispersion mediums) is 90% by mass or more. It is preferable that the proportion of the water in all solvents (or all dispersion mediums) is 95% by mass or more, and it is particularly preferable that all solvents (or all dispersion mediums) are water.

In addition, the solid content refers to a component excluding the solvent (or the dispersion medium).

As described above, the water-based coating liquid used in this step is not particularly limited as long as it is a liquid material containing water as a solvent (or a dispersion medium) and a solid content.

The solid content contained in the water-based coating liquid includes a component for obtaining the desired coating film, a component for improving coating suitability, and the like.

Examples of the water contained in the water-based coating liquid include natural water, purified water, distilled water, ion-exchanged water, pure water, and ultrapure water (for example, Milli-Q water). The Milli-Q water is ultrapure water obtained by a Milli-Q water production apparatus manufactured by Merck KGaA.

A content of the water in the water-based coating liquid is not particularly limited, and is, for example, preferably 20% by mass or more, and more preferably 30% by mass or more with respect to the total mass of the water-based coating liquid.

The upper limit value of the content of the water may be less than 100% by mass, and for example, from the viewpoint of coating suitability, it is preferably 90% by mass and more preferably 80% by mass with respect to the total mass of the water-based coating liquid.

The water-based coating liquid may contain particles as one of the solid contents. That is, the water-based coating liquid may be a coating liquid containing particles.

In a case of using a water-based coating liquid containing particles, in a stage of constant rate drying, a volume change due to aggregation of the particles is added in addition to evaporation of the water as the solvent, so that the contraction of the coating liquid film tends to be large. However, by adopting the coating film forming method according to the present embodiment, even in a case where the water-based coating liquid containing particles is used (in other words, in a case where the contraction of the coating liquid film increases), the creases in the uncoated portion can be suppressed.

The particles are not particularly limited as long as they are granular substances, and may be inorganic particles, organic particles, or composite particles of an inorganic substance and an organic substance.

As the inorganic particles, known inorganic particles which can be applied to the desired coating film can be used.

Examples of the inorganic particles include particles of a metal (alkali metal, alkaline earth metal, transition metal, or an alloy of these metals); particles of a semi-metal (silicon and the like); particles of a metal or semi-metal compound (oxide, hydroxide, nitride, and the like); and particles of a pigment containing carbon black and the like.

Examples of the inorganic particles also include particles of a mineral such as a mica; and particles of an inorganic pigment.

As the organic particles, known organic particles which can be applied to the desired coating film can be used.

The organic particles are not particularly limited as long as they are particles of a solid organic substance, including resin particles and organic pigment particles.

Examples of the composite particles of an inorganic substance and an organic substance include composite particles in which inorganic particles are dispersed in an organic matrix; composite particles in which organic particles are coated with an inorganic substance; and composite particles in which inorganic particles are coated with an organic substance.

The particles may be surface-treated for the purpose of imparting dispersibility or the like.

The above-described composite particles may be formed as described above by being subjected to the surface treatment.

A particle size, specific gravity, form of use (for example, the presence or absence of the combined use), and the like of the particles are not particularly limited, and they may be appropriately selected according to the desired coating film or the conditions suitable for forming the coating film.

A content of the particles in the water-based coating liquid is not particularly limited, and may be appropriately determined according to the desired coating film, the conditions suitable for forming the coating film, or the purpose of adding the particles.

The content of the particles in the water-based coating liquid may be, for example, 50% by mass or more.

The solid content contained in the water-based coating liquid is not particularly limited, and examples thereof include various components used to obtain the desired coating film.

In addition to the particles described above, specific examples of the solid content contained in the water-based coating liquid include binder components, components which contribute to dispersibility of the particles, polymerizable compounds, reactive components such as a polymerization initiator, components for improving coating performance, such as a surfactant, and other additives.

From the viewpoint of coating properties, a concentration of solid contents of the coating liquid (preferably, the water-based coating liquid) is, for example, preferably 30% by mass to 80% by mass, and more preferably 40% by mass to 70% by mass.

It is also preferable that the coating liquid used in this step is a slurry containing an electrode active material and a conductive auxiliary agent (hereinafter, also referred to as a slurry for an electrode layer). By using the slurry containing an electrode active material and a conductive auxiliary agent, an electrode layer can be obtained as the coating film.

The slurry for an electrode layer further contains a binder, a thickener, or the like, in addition to the electrode active material and the conductive auxiliary agent.

Examples of the electrode active material contained in the slurry include a negative electrode active material and a positive electrode active material.

Examples of the negative electrode active material and the positive electrode active material include a negative electrode active material and a positive electrode active material in a known lithium ion secondary battery.

Specific examples of the negative electrode active material include carbon materials such as graphite, hard carbon (non-graphitizable carbon), and soft carbon (easily graphitizable carbon); metal oxide materials such as silicon oxide, titanium oxide, vanadium oxide, and lithium-titanium composite oxide; and metal nitride materials such as lithium nitride, lithium-cobalt composite nitride, and lithium-nickel composite nitride.

Specifically, as the positive electrode active material, a lithium transition metal composite oxide containing a lithium element and a transition metal element is used. Examples of the lithium transition metal composite oxide include a lithium-nickel composite oxide (for example, LiNiO₂), and a lithium-nickel-cobalt-manganese composite oxide (for example, LiNi_{1/3}Co_{1/3}Mn_{1/3}O₂).

Examples of the conductive auxiliary agent contained in the slurry include a known conductive auxiliary agent in a lithium ion secondary battery.

Specific examples of the conductive auxiliary agent include carbon materials such as carbon black (for example, acetylene black, ketjen black, furnace black, channel black, lamp black, thermal black, and the like), activated carbon, graphite, and carbon fiber.

Examples of the binder contained in the slurry include a known binder in a lithium ion secondary battery.

Specifically, as the binder, for example, polyvinylidene fluoride (PVDF), polytetrafluoroethylene (PTFE), styrene-butadiene rubber (SBR), or the like is used.

Further, various additives used in a known lithium ion secondary battery, such as a thickener of carboxylmethyl cellulose (CMC), and a dispersant, may be added to the slurry.

In addition, a solvent contained in the slurry may be any dispersion medium which can disperse the electrode active material and the conductive auxiliary agent, and specific examples thereof include water and an organic solvent.

A concentration of solid contents of the slurry for an electrode layer is, for example, preferably 40% by mass to 80% by mass, and more preferably 50% by mass to 70% by mass.

### -Film thickness of coating liquid film-

A film thickness of the coating liquid film formed in this step is not particularly limited, and may be appropriately determined depending on the desired coating film.

The thickness of the coating liquid film can be selected from, for example, 50 µm to 350 µm, 80 µm to 300 µm, or 80 µm to 200 µm.

In a case of the coating liquid film for forming the electrode layer, the thickness of the coating liquid film is preferably 30 µm to 100 µm, and more preferably 50 µm to 80 µm.

The thickness of the coating liquid film is measured as follows.

That is, with the coating liquid film, thicknesses are measured at three points along the width direction (that is, a position 5 mm from both edge portions in the width direction and a central part in the width direction) using an optical interference-type thickness measuring device (for example, infrared spectroscopic interference type film thickness meter SI-T80 of Keyence Corporation). The arithmetic average value of the measured values at the three points is obtained, and this is used as the thickness of the coating liquid film.

### -Coating width-

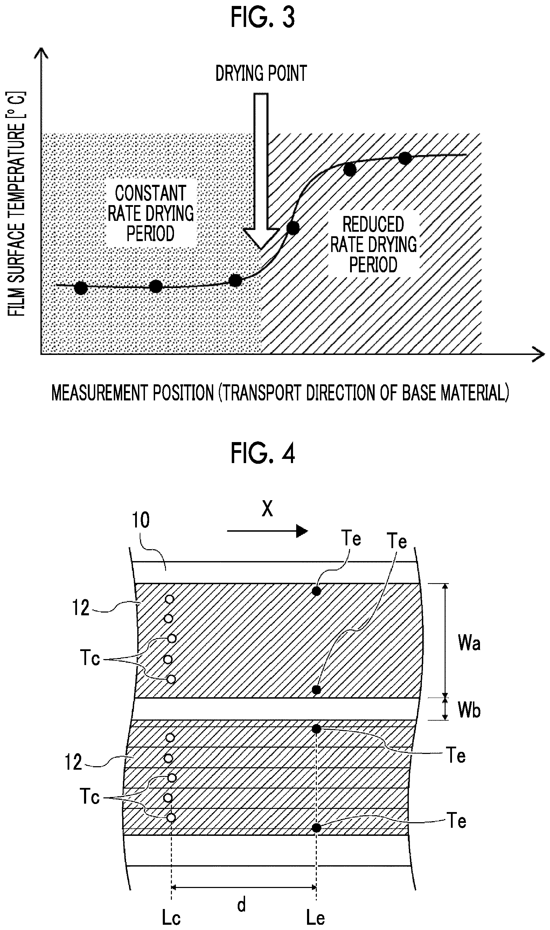

In this step, a coating width of one row (that is, a width of one coating liquid film, specifically, "Wa" shown in Fig. 4) is not particularly limited, and may be appropriately determined according to the desired coating film.

The coating width can be selected from, for example, 200 mm or less, 150 mm or less, or 100 mm or less.

The lower limit of the coating width is, for example, 30 mm.

The coating width may be different or the same for each row. However, from the viewpoint of handling of the base material, it is preferable that the coating width of each of the plurality of coating liquid films is almost the same, and the coating liquid films are arranged in a state close to symmetry in the width direction of the base material. In this case, a difference in coating widths of the plurality of coating liquid films is preferably 20 mm or less and more preferably 5 mm or less, and may be 0 mm.

### -Width of uncoated portion-

In this step, a width of the uncoated portion between coating liquid films (that is, a width of the exposed portion of the base material between coating liquid films, specifically, "Wb" shown in Fig. 4) is not particularly limited, and may be appropriately determined according to the use of the desired coating film.

The width of the uncoated portion between coating liquid films can be selected from, for example, 5 mm to 100 mm, or 10 mm to 50 mm.

In a case where there are a plurality of uncoated portions between coating liquid films, widths of the plurality of uncoated portions may be different or the same.

In addition, in the coating film forming method according to the present embodiment, it is preferable that the width of the uncoated portion between coating liquid films is 5% to 40% of the width of one coating liquid film (that is, the coating width). In a case where the width of the uncoated portion between coating liquid films is 5% to 40% of the width of one coating liquid film, the creases in the uncoated portion tends to occur, but with the coating film forming method according to the present embodiment, it is possible to suppress the creases in the uncoated portion.

The width of the uncoated portion is more preferably 5% to 30% of the width of one coating liquid film, and still more preferably 8% to 25% of the width of one coating liquid film.

Here, the above-described width of one coating liquid film refers to an arithmetic average value of widths of two adjacent coating liquid films in the uncoated portion between coating liquid films.

The coating width and the width of the uncoated portion are measured as follows.

That is, the film surface of the coating liquid film is viewed from above, and the width of one coating liquid film is measured at three points with a ruler at intervals of 500 mm in the longitudinal direction. The arithmetic average value of the measured values at the three points is obtained, and this is used as the coating width.

In addition, the film surface of the coating liquid film is viewed from above, and the width of the uncoated portion between coating liquid films is measured at three points with a ruler at intervals of 500 mm in the longitudinal direction. The arithmetic average value of the measured values at the three points is obtained, and this is used as the width of the uncoated portion.

### -Number of coating liquid films formed-

In this step, the number of coating liquid films formed may be 2 or more, and may be determined based on the width of the base material and according to the width of the coating liquid film and the width of the uncoated portion.

### -Coating-

The coating with the coating liquid in this step is not particularly limited as long as it is possible to form a plurality of coating liquid films, and a known coating unit is adopted.

As the coating unit (for example, the coating unit 20 in Fig. 1), a coating unit called multi-row coating, stripe coating, or the like is adopted. Specific examples of the coating unit include a pre-weighing type coater such as an extrusion type die coater, a spray coater, and a slide bead coater.

### Step B

In the step B, in each of the plurality of coating liquid films, a solvent contained in the coating liquid is applied on both end parts of a coating liquid film in a width direction in a case where a concentration of solid contents of the both end parts of the coating liquid film in the width direction is higher than a concentration of solid contents of a central part of the coating liquid film in the width direction, so that the concentration of solid contents of the both end parts of the coating liquid film in the width direction is to be equal to or lower than the concentration of solid contents of the central part of the coating liquid film in the width direction.

In this step, in each of the plurality of coating liquid films, the both end parts of the coating liquid film in the width direction are dried faster than the central part of the coating liquid film in the width direction, and the solvent contained in the coating liquid is applied on the both end parts of the coating liquid film in the width direction in a case where the concentration of solid contents of the both end parts of the coating liquid film in the width direction is higher than the concentration of solid contents of the central part of the coating liquid film in the width direction.

As the solvent contained in the coating liquid, in a case where two or more kinds of solvents are used, one solvent of the two kinds may be used, or two solvents thereof may be mixed and used. Specifically, in a case where the solvent is a mixture of two or more kinds, it is preferable to use a solvent (main solvent) with the highest mixing ratio or to use a mixture with the same mixing ratio as the coating liquid, and it is more preferable to use a mixture with the same mixing ratio as the coating liquid.

In the coating liquid film, the drying of the both end parts in the width direction proceeds faster than the drying of the central part in the width direction. This is because the both end parts of the coating liquid film in the width direction have side surfaces, so that the exposed area is large, and the coating liquid film is susceptible to heat transfer from the base material. Therefore, immediately after the coating liquid film is formed, the concentration of solid contents of the both end parts of the coating liquid film in the width direction is higher than the concentration of solid contents of the central part of the coating liquid film in the width direction. As described above, since the both end parts of the coating liquid film in the width direction are dried faster than the central part in the width direction, the curling occurs. **In** order to suppress the curling, in this step, the solvent contained in the coating liquid is applied on the both end parts of the coating liquid film in the width direction. By applying the solvent contained in the coating liquid on the both end parts of the coating liquid film in the width direction, the concentration of solid contents of the both end parts of the coating liquid film in the width direction is to be equal to or lower than the concentration of solid contents of the central part of the coating liquid film in the width direction. By doing so, the drying of the both end parts of the coating liquid film in the width direction can be completed at the same time as or later than the drying of the central part of the coating liquid film in the width direction. Accordingly, it is possible to suppress the curling in the both end parts of the coating liquid film in the width direction, and as a result, it is possible to suppress the creases in the uncoated portion.

In the present disclosure, the completion of drying means a state in which no more solvent is removed from the coating liquid film. Examples of the completion of the drying include a state in which the concentration of solid contents of the coating liquid film is 100% by mass.

In the present disclosure, the concentration of solid contents of the coating liquid film can be obtained by, using an optical interference-type thickness measuring device, for example, using an infrared spectroscopic interference type film thickness meter SI-T80 of Keyence Corporation, measuring an optical thickness of the film immediately before a timing of application until the film becomes a dried film.

Specifically, first, the optical thickness of the film immediately before a timing of application until the film becomes a dried film is measured. Next, a thickness of the film after the drying (dried film) is measured with a contact thickness meter. The measured thickness of the dried film is divided by the optical thickness, and the thickness of the wet film (coating film) is calculated from the optical thickness. The amount of the solvent (or the dispersion medium) at the measurement point is obtained. The mass of the solvent (or the dispersion medium) is obtained from the obtained amount of the solvent (or the dispersion medium), and the value of the concentration of solid contents at the measurement point is calculated.

### -Preferred aspect-

In this step, it is preferable that the concentration of solid contents of the both end parts of the coating liquid film in the width direction, after applying the solvent contained in the coating liquid, is 0.8 times or more of a concentration of solid contents of the coating liquid, it is more preferable to be 0.9 times or more of the concentration of solid contents of the coating liquid, and it is still more preferable to be 1 times or more of the concentration of solid contents of the coating liquid (that is, equal to or higher than the concentration of solid contents of the coating liquid). In other words, the concentration of solid contents of the both end parts of the coating liquid film in the width direction, after applying the solvent contained in the coating liquid, is preferably 80% or more (more preferably 90% or more and still more preferably 100% or more) of the concentration of solid contents of the coating liquid. That is, in the both end parts of the coating liquid film in the width direction, the concentration of solid contents is lowered by applying the solvent contained in the coating liquid, but it is preferable to determine a degree of decrease in the concentration of solid contents according to the concentration of solid contents of the coating liquid.

For example, in a case where the concentration of solid contents of the coating liquid is 50% by mass, the concentration of solid contents of the both end parts of the coating liquid film in the width direction, after applying the solvent contained in the coating liquid, is preferably 40% by mass or more. In this way, by not excessively reducing the concentration of solid contents of the both end parts of the coating liquid film in the width direction, after applying the solvent contained in the coating liquid, it is easy to suppress collapse, separation, and the like of the both end parts of the coating liquid film in the width direction, and it is possible to prevent deterioration of a surface state in the both end parts of the coating film in the width direction.

Here, the concentration of solid contents of the coating liquid film after applying the solvent contained in the coating liquid refers to a concentration of solid contents of a coating liquid film, which is calculated from a film thickness measured with a laser displacement meter at a position of 200 mm downstream of a position where the solvent has been applied.

In this step, it is preferable that, in a case where the concentration of solid contents of the both end parts of the coating liquid film in the width direction reaches 80% by mass to 100% by mass, the solvent contained in the coating liquid is applied on the both end parts of the coating liquid film in the width direction. That is, it is preferable that, in a case where the concentration of solid contents of the both end parts of the coating liquid film in the width direction is as high as 80% by mass to 100% by mass (that is, in a case where the drying has proceeded), the solvent contained in the coating liquid is applied on the both end parts of the coating liquid film in the width direction. By applying the solvent contained in the coating liquid on the both end parts of the coating liquid film in the width direction at such timing, it is easy to suppress collapse, separation, and the like of the both end parts of the coating liquid film in the width direction, and it is possible to prevent deterioration of a surface state in the both end parts of the coating film in the width direction.

The application of the solvent on the both end parts of the coating liquid film in the width direction may be performed once, or twice or more, that is may be performed a plurality of times.

In addition, the application of the solvent on the both end parts of the coating liquid film in the width direction may be performed at the same timing or at different timings in each of the plurality of coating liquid films.

The position where the solvent is applied may be only the both end parts of the coating liquid film in the width direction, or may include a part of the central part of the coating liquid film in the width direction in addition to the both end parts of the coating liquid film in the width direction.

In this step, a method of applying the solvent on the both end parts of the coating liquid film in the width direction (for example, the applying unit 30 in Fig. 1) is not particularly limited. Examples of the method of applying the solvent include a bar coater, a spray coater, and a slot die coater, and among these, a spray coater is preferable.

That is, from the viewpoint of easy adjustment of the amount of solvent to be applied without contacting the coating liquid film, it is preferable that the application of the solvent on the both end parts of the coating liquid film in the width direction is performed by spray coating.

### Step C

In this step, it is preferable to dry the coating liquid films as in the following step C.

That is, it is preferable that, in the step C, the coating liquid films are dried in a state in which, in each of the plurality of coating liquid films, drying points Te at the both end parts of the coating liquid film in the width direction are on a downstream side in a transport direction of the base material, compared with a drying point Tc at the central part of the coating liquid film in the width direction.

Here, although there are two drying points Te at the both end parts of the coating liquid film in the width direction, it is preferable that the drying of the coating liquid films are performed in this step, such that both of the two drying points Te at the both end parts of the coating liquid film in the width direction are on a downstream side in the transport direction of the base material, compared with the drying point Tc at the central part of the coating liquid film in the width direction.

The drying point Te at the both end parts of the coating liquid film in the width direction and the drying point Tc at the central part of the coating liquid film in the width direction in this step will be described.

The "drying point" in the present disclosure refers to a point at which the coating liquid film shifts from a constant rate drying period to a reduced rate drying period. Here, in the present disclosure, as shown in Fig. 3, a period during which a film surface temperature of the coating liquid film exhibits a constant value (specifically, period during which a temperature change of the film surface temperature is within ± 5°C) is regarded as the "constant rate drying period", and a period during which the film surface temperature rises after the constant rate drying period (that is, the period during which the film surface temperature of the coating liquid film exhibits a constant value) is regarded as the "reduced rate drying period". Therefore, as shown in Fig. 3, a change point of the film surface temperature, that the period during which the film surface temperature of the formed coating liquid film exhibits a constant value is changed to a state of increase, is the drying point.

The drying point is defined as a point at which the film surface temperature in the period exhibiting a constant value is changed by higher than 5°C.

Here, the film surface temperature of the coating liquid film is measured by a plurality of non-contact radiation thermometers which are installed above the coating liquid film and along the transport direction of the base material. A drying point which is obtained from the film surface temperature measured at the both end parts of the coating liquid film in the width direction is the "drying point Te at the both end parts of the coating liquid film in the width direction". The film surface temperature at the both end parts of the coating liquid film in the width direction is measured 5 mm inside from the width direction edge portion of the coating liquid film. That is, the drying point Te refers to a drying point 5 mm inward from the width direction edge portion of the coating liquid film. In addition, a drying point which is obtained from the film surface temperature measured at the central part of the coating liquid film in the width direction is the "drying point Tc at the central part of the coating liquid film in the width direction". The film surface temperature at the central part of the coating liquid film in the width direction is obtained by, for example, dividing the central part of the coating liquid film in the width direction (that is, a region inside the both end parts of the coating liquid film in the width direction) into 5 equal parts in the width direction, and measuring the center of each of the 5 equal parts in the width direction. It is desirable that the measurement is adopted in a case where the width of the central part of the coating liquid film in the width direction is more than 90 mm. In a case where the width of the central part of the coating liquid film in the width direction is 30 mm to 90 mm, the film surface temperature at the central part of the coating liquid film in the width direction may be obtained by dividing the central part of the coating liquid film in the width direction (that is, a region inside the both end parts of the coating liquid film in the width direction) into 3 equal parts in the width direction, and measuring the center of each of the 3 equal parts in the width direction. In addition, in a case where the width of the central part of the coating liquid film in the width direction is less than 30 mm, the film surface temperature at the central part of the coating liquid film in the width direction may be obtained by measuring one point in the center of the coating liquid film in the width direction. As described above, one drying point Tc at the central part of the coating liquid film in the width direction may be obtained, or three or five drying points Tc may be obtained depending on the width of the coating liquid film.

### -Drying-

In this step, it is preferable that the drying of the coating liquid films are performed in a state in which the drying points Te at the both end parts of the coating liquid film in the width direction are on a downstream side in the transport direction of the base material, compared with the drying point Tc at the central part of the coating liquid film in the width direction.

The drying of the coating liquid films in this step will be described in detail with reference to Fig. 4. Fig. 4 is a top schematic diagram for explaining the plurality of coating liquid films formed on the base material. As shown in Fig. 4, in a case where the transport direction of the long base material 10 is defined as the X direction, in each of two formed coating liquid films 12, the coating liquid films 12 are dried such that the drying points Te at the both end parts of the coating liquid film in the width direction are on a downstream side in the X direction, compared with the drying points Tc at the central part of the coating liquid film in the width direction. In a case where three or five drying points Tc at the central part of the coating liquid film in the width direction are obtained as described above, it is preferable that the coating liquid films 12 are dried such that the drying points Te at the both end parts of the coating liquid film in the width direction are on a downstream side in the X direction, compared with all drying points Tc at the central part of the coating liquid film in the width direction.

In the present disclosure, "d" in Fig. 4 is a distance between the drying points Te at the both end parts of the coating liquid film in the width direction and the drying points Tc at the central part of the coating liquid film in the width direction. More specifically, as shown in Fig. 4, the "d" refers to a distance between a straight line Le which passes through the drying points Te and is parallel to the width direction of the base material 10 (that is, a direction orthogonal to the transport direction X of the base material) and a straight line Lc which passes through the drying points Tc and is parallel to the width direction of the base material 10 (that is, the direction orthogonal to the transport direction X of the base material). As shown in Fig. 4, in a case where there are two drying points Te at the both end parts of the coating liquid film in the width direction and a plurality of drying points Tc at the central part of the coating liquid film in the width direction, the "d" may be the shortest distance between the drying points Te and the drying points Tc.

In a case where the drying points Te at the both end parts of the coating liquid film in the width direction are on a downstream side in the transport direction of the base material (downstream side in the X direction), compared with the drying points Tc at the central part of the coating liquid film in the width direction, the "d" is expressed as a positive value; and in a case where the drying points Te at the both end parts of the coating liquid film in the width direction are on an upstream side in the transport direction of the base material (upstream side in the X direction), compared with the drying points Tc at the central part of the coating liquid film in the width direction, the "d" is expressed as a negative value. That is, in a case where the value of "d" is "1 m", the drying points Te at the both end parts of the coating liquid film in the width direction are on a downstream side in the transport direction of the base material (downstream side in the X direction), compared with the drying points Tc at the central part of the coating liquid film in the width direction, and the distance between the drying points Te and the drying points Tc is 1 m. In addition, in a case where the value of "d" is "-2 m", the drying points Te at the both end parts of the coating liquid film in the width direction are on an upstream side in the transport direction of the base material (upstream side in the X direction), compared with the drying points Tc at the central part of the coating liquid film in the width direction, and the distance between the drying points Te and the drying points Tc is 2 m.

From the viewpoint of suppressing creases in the uncoated portion, it is preferable that the drying points Te at the both end parts of the coating liquid film in the width direction and the drying point Tc at the central part of the coating liquid film in the width direction are separated from each other, and the distance therebetween ("d" in Fig. 4) is preferably 0.05 m or more, more preferably 0.08 m or more, still more preferably 0.1 m or more, and particularly preferably 1 m or more. Examples of the upper limit of the distance between the drying points Te at the both end parts of the coating liquid film in the width direction and the drying point Tc at the central part of the coating liquid film in the width direction include 20 m.

In order to ensure that the drying points Te at the both end parts of the coating liquid film in the width direction are on a downstream side in the transport direction of the base material, compared with the drying point Tc at the central part of the coating liquid film in the width direction, a method of drying the central part of the coating liquid film in the width direction faster than the both end parts in the width direction may be used.

In this step, from the viewpoint of easy control of the drying state at each of the both end parts and the central part of the coating liquid film in the width direction, as shown in Fig. 1, it is preferable that, in the drying zone 40, the drying of the coating liquid films is performed by applying hot air from a hot air drying mechanism 42 to each of the plurality of coating liquid films, as indicated by arrows.

More specifically, it is preferable that the following conditions (1) to (3) are satisfied in applying hot air to each of the plurality of coating liquid films.
(1) in each of the plurality of coating liquid films, a wind speed of hot air applied to the central part of the coating liquid film in the width direction is set to be higher than a wind speed of hot air applied to the both end parts of the coating liquid film in the width direction.
(2) in each of the plurality of coating liquid films, a dew point of hot air applied to the central part of the coating liquid film in the width direction is set to be lower than a dew point of hot air applied to the both end parts of the coating liquid film in the width direction.
(3) in each of the plurality of coating liquid films, a temperature of hot air applied to the central part of the coating liquid film in the width direction is set to be higher than a temperature of hot air applied to the both end parts of the coating liquid film in the width direction.

By satisfying each of the conditions (1) to (3), the central part of the coating liquid film in the width direction can be dried faster than the both end parts in the width direction.

One of the conditions (1) to (3) may be satisfied, or a plurality of the conditions (1) to (3) may be satisfied.

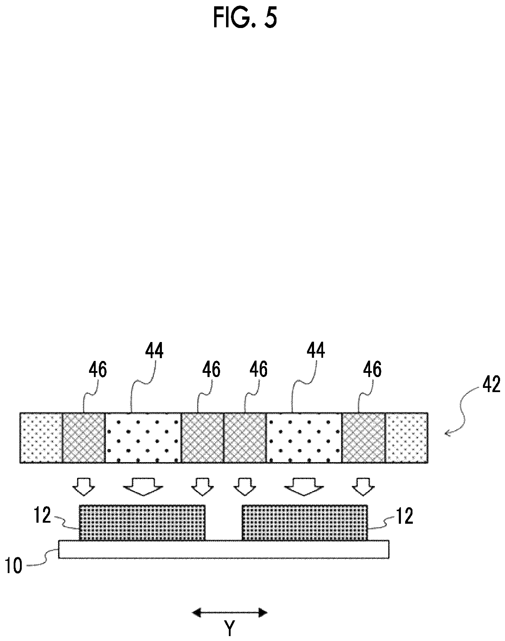

A drying method satisfying the above-described conditions (1) to (3) will be described in detail with reference to Fig. 5.

Fig. 5 is a schematic diagram for explaining an aspect in which hot air is applied from the hot air drying mechanism 42 to the coating liquid films 12 formed on the base material 10. Here, Fig. 5 is a schematic diagram of the base material 10 and the coating liquid films 12 in the step C in a cross-sectional view in the width direction (Y direction in Fig. 5). As shown in Fig. 5, the hot air drying mechanism 42 is disposed to face the film surface of the coating liquid film 12. In the width direction of the base material 10, the hot air drying mechanism 42 includes, side by side, an air supply part 44 for applying hot air to the central part of the coating liquid film 12 in the width direction, and an air supply part 46 for applying hot air to the both end parts of the coating liquid film 12 in the width direction.

In order to satisfy the above-described condition (1), in Fig. 5, it is sufficient that a wind speed of the hot air blown from the air supply part 44 to the central part of the coating liquid film 12 in the width direction is set to be higher than a wind speed of the hot air blown from the air supply part 46 to the both end parts of the coating liquid film 12 in the width direction. An aspect in which the hot air is blown only from the air supply part 44 to the central part of the coating liquid film 12 in the width direction and the hot air is not blown from the air supply part 46 to the both end parts of the coating liquid film 12 in the width direction may be used. By using such methods, the wind speed of the hot air applied to the central part of the coating liquid film 12 in the width direction can be set to be higher than the wind speed of the hot air applied to the both end parts of the coating liquid film 12 in the width direction.

Here, the wind speed of the hot air applied to the coating liquid film 12 can be measured by a thermal anemometer disposed between an outlet of the hot air in the air supply parts 44 and 46 and the coating liquid film.

In order to satisfy the above-described condition (2), in Fig. 5, it is sufficient that a dew point of the hot air blown from the air supply part 44 to the central part of the coating liquid film 12 in the width direction is set to be lower than a dew point of the hot air blown from the air supply part 46 to the both end parts of the coating liquid film 12 in the width direction. By using such a method, the dew point of the hot air applied to the central part of the coating liquid film 12 in the width direction can be set to be lower than the dew point of the hot air applied to the both end parts of the coating liquid film 12 in the width direction.

Here, the dew point of the hot air applied to the coating liquid film 12 can be measured by a capacitance dew point meter disposed between an outlet of the hot air in the air supply parts 44 and 46 and the coating liquid film.

In order to satisfy the above-described condition (3), in Fig. 5, it is sufficient that a temperature of the hot air blown from the air supply part 44 to the central part of the coating liquid film 12 in the width direction is set to be higher than a temperature of the hot air blown from the air supply part 46 to the both end parts of the coating liquid film 12 in the width direction. By using such a method, the temperature of the hot air applied to the central part of the coating liquid film 12 in the width direction can be set to be higher than the temperature of the hot air applied to the both end parts of the coating liquid film 12 in the width direction.

Here, the temperature of the hot air applied to the coating liquid film 12 can be measured by a thermometer disposed between an outlet of the hot air in the air supply parts 44 and 46 and the coating liquid film.

### -Wind speed, dew point, and temperature of hot air-

In this step, the wind speed of the hot air applied to the coating liquid film (or the laminate) is preferably 10 m/sec to 60 m/sec, and more preferably 20 m/sec to 50 m/sec. In the above-described condition (1), a difference between the wind speed of the hot air at the both end parts of the coating liquid film in the width direction and the wind speed of the hot air at the central part of the coating liquid film in the width direction is preferably 1 m/sec to 40 m/sec, and more preferably 5 m/sec to 20 m/sec.

In addition, the dew point of the hot air applied to the coating liquid film (or the laminate) is preferably -30°C to 20°C, and more preferably -20°C to 10°C. In the above-described condition (2), a difference between the dew point of the hot air at the both end parts of the coating liquid film in the width direction and the dew point of the hot air at the central part of the coating liquid film in the width direction is preferably 5°C to 40°C, and more preferably 10°C to 30°C.

Furthermore, the temperature of the hot air applied to the coating liquid film (or the laminate) is preferably 30°C to 150°C, and more preferably 45°C to 100°C. In the above-described condition (3), a difference between the temperature of the hot air at the both end parts of the coating liquid film in the width direction and the temperature of the hot air at the central part of the coating liquid film in the width direction is preferably 5°C to 50°C, and more preferably 10°C to 30°C.

As described above, the coating film is formed on the base material through each of the steps.

A thickness of the coating film obtained through each of the steps is not particularly limited, and may be any thickness as long as it is suitable for the purpose, use, and the like.

In the coating film forming method according to the present embodiment, the thickness of the coating film is preferably 40 µm or more, more preferably 50 µm or more, and still more preferably 60 µm or more.

The upper limit value of the thickness of the coating film is not particularly limited and may be determined depending on the intended use, but is, for example, 300 µm.

The measurement of the thickness of the coating film is the same as the measurement of the thickness of the coating liquid film.

### -Preferred aspect-

The coating film obtained through each of the steps preferably has the following aspect.

For example, in using a slurry for an electrode layer as the coating liquid, it is preferable that, in a case where a color density of both end parts of the obtained coating film in a width direction is represented by T and a color density of a central part of the coating film in the width direction is represented by C, a relationship of 0.9 ≤ T/C is satisfied.

In a case where 0.9 ≤ T/C is satisfied, there is no collapse, separation, or the like at the both end parts of the coating film in the width direction, and it means that there is no or little difference in composition and thickness between the both end parts of the coating film in the width direction and the central part of the coating film in the width direction. Therefore, it is preferable that the value of T/C is larger, and T/C is preferably 0.95 or more, more preferably 0.98 or more, and particularly preferably 1.0.

The color densities T and C of the coating film are measured as follows.

An L* value measured with a densitometer (for example, NR-12B manufactured by NIPPON DENSHOKU INDUSTRIES Co., Ltd.) is used as the color density in the coating film.

L* values are measured at any 5 points of each of the both end parts of the coating film in the width direction and the central part of the coating film in the width direction, and the arithmetic average value thereof is used as the color density at the both end parts of the coating film in the width direction and the color density at the central part of the coating film in the width direction.

### Other steps

If necessary, other steps may be provided at least one of before the step A or after the step C.

Examples of the other steps include a pretreatment step performed before applying the coating liquid film, and a posttreatment step performed on the formed coating film according to the use of the coating film.

Specific examples of the other steps include a step of cutting the uncoated portion between coating films (the exposed portion of the base material), a step of surface-treating the base material, a step of curing the coating film, a step of compressing the coating film, and a step of peeling off the base material from the coating film.

In the coating film forming method according to the present embodiment, the number of base materials continuously transported may be one, or two or more. That is, a plurality of base materials may be continuously transported in parallel, and the coating liquid film may be formed each base material.

Since the coating film forming method according to the present embodiment is a method for forming a plurality of coating films on a continuously transported base material, the coating film forming method according to the present embodiment is suitable for forming a coating film for use which require high productivity.

### Examples

Hereinafter, the present invention will be described in detail with reference to Examples. The materials, the amounts of materials to be used, the proportions, the details of each step, or the like shown in the examples below may be modified appropriately as long as the modifications do not depart from the spirit of the present invention. Therefore, the scope of the present invention is not limited to the specific examples described below.

All "part" are based on mass. In addition, "d" in Table 1 is a distance between the drying point Te and the drying point Tc.

### Preparation of base material

A copper base material (thermal conductivity: 400 W/m·K and Young's modulus: 129.8 GPa) having a width of 200 mm, a thickness of 12 µm, and a length of 300 m was prepared.

### Preparation of coating liquid

### Preparation of slurry for electrode layer

Natural graphite (C) as a negative electrode active material, styrene-butadiene rubber (SBR) as a binder, and carboxylmethyl cellulose (CMC) as a thickener were weighed such that the mass ratio was C:SBR:CMC = 98:1:1, and mixed with ion-exchanged water as a solvent to prepare a slurry for a negative electrode layer, having a concentration of solid contents of 50% by mass.

### Preparation of water-based coating liquid

The following components were mixed to prepare a water-based coating liquid 1.
· Polyvinyl alcohol: 58 parts
   (CKS-50; saponification degree: 99% by mole, degree of polymerization: 300, manufactured by Nippon Synthetic Chemical Industry Co., Ltd.)
· CELOGEN PR of DKS Co., Ltd.: 24 parts
· Surfactant (EMALEX 710 of Nihon Emulsion Co., Ltd.): 5 parts
· Aqueous dispersion of ART PEARL J-7P, prepared by the following method: 913 parts

### -Aqueous dispersion of ART PEARL J-7P-

25 parts of EMALEX 710 (Nihon Emulsion Co., Ltd., nonionic surfactant) and 25 parts of sodium carboxymethyl cellulose were added and dissolved in 621 parts of pure water. 329 parts of ART PEARL (registered trademark) J-7P (Negami Chemical Industrial Co., Ltd., silica composite crosslinked acrylic resin fine particles) was added to the obtained aqueous solution, and dispersed for 15 minutes using Ace homogenizer (NISSEI Corporation) at 10,000 revolutions per minute (rpm; the same applies hereinafter) to obtain the aqueous dispersion of ART PEARL J-7P (particle concentration: 32.9% by mass).

The true specific gravity of the silica composite crosslinked acrylic resin fine particles in the obtained aqueous dispersion was 1.20, and the average particle diameter was 6.5 µm.

### Preparation of PVA aqueous solution

PVA 203 (manufactured by KURARAY Co., Ltd., saponification degree: 87 mol% to 89 mol%) was put into pure water, and the solution was stirred while being heated to 80°C to dissolve PVA, thereby preparing a PVA aqueous solution in which PVA was dissolved in pure water. The concentration of PVA in the PVA aqueous solution was 30% by mass.

### Example A1

In an apparatus configured as shown in Fig. 1, a copper base material was coated with two rows of a slurry for an electrode layer to form a coating liquid film, and the formed coating liquid film was dried to obtain two coating films. A transportation speed of the base material until the coating film was obtained was 20 m/min.

Specifically, the slurry for an electrode layer was applied onto a base material which was continuously transported in two rows (step A). In the formed coating liquid film, the coating width was 80 mm, the film thickness was 80 µm, the width of the uncoated portion between coating liquid films was 20 mm, and each of the width of the uncoated portion in the both end parts of the base material was 10 mm (the width of the uncoated portion between coating liquid films was 20% of the width of one coating liquid film).

Subsequently, in each of the two coating liquid films, a solvent (ion-exchanged water) contained in the coating liquid was applied on both end parts of the coating liquid film in the width direction, in a case where the concentration of solid contents of the both end parts of the coating liquid film in the width direction was 100% by mass, and was higher than 70% by mass as the concentration of solid contents of the central part of the coating liquid film in the width direction. By applying the ion-exchanged water, the concentration of solid contents of the both end parts of the coating liquid film in the width direction was set to 35% by mass. In addition, spray coating was used to apply the ion-exchanged water.

Subsequently, using a hot air drying mechanism, hot air was blown to the coating liquid films to dry the coating liquid film (step C). In this case, the hot air was not applied up to 25 mm from the both ends of the coating liquid film in the width direction, and hot air with a dew point of 10°C and at a temperature of 60°C was applied to the center of the coating liquid film in the width direction at a wind speed of 20 m/min. In the step C, it was confirmed that the drying points Te were on a downstream side in the transport direction of the base material, compared with the drying point Tc, and "d" was 11 m.

Through each of the steps as described above, two coating films were formed on the base material.

### Examples A2 to A7

Two coating films were formed on the base material in the same manner as in Example A1, except that, in Example A1, the conditions in the step B were changed as appropriate as shown in Table 1 below.

### Comparative Example A1

Two coating films were formed on the base material in the same manner as in Example A1, except that, in Example A1, the step B was not performed (that is, the solvent was not applied to the both end parts of the coating liquid film in the width direction).

### Evaluation of creases

At the outlet of the drying zone (drying zone 40 in Fig. 1), the presence or absence of creases was visually confirmed.

The evaluation results are shown in Table 1.

### Evaluation of surface state in both end parts of coating film in width direction

A surface state in the both end parts of the obtained coating film in the width direction was visually confirmed, and evaluated according to the following standard.

The evaluation results are shown in Table 1.

### -Standard-

G1 : there was no difference in surface state between the part to which the solvent was applied and the part to which the solvent was not applied.
G2: compared to the part to which the solvent was not applied, the part to which the solvent was applied had a slightly rough surface state.
G3: compared to the part to which the solvent was not applied, the part to which the solvent was applied had a rough surface state.

### T/C

T/C of the obtained coating film was measured by the method described above.

The measurement results are shown in Table 1.

**Table 1**

| | Concentration of solid contents of coating liquid [% by mass] | Applying of solvent to both end parts of coating liquid film in width direction | | | "d" [m] | Evaluation | | |
|---|---|---|---|---|---|---|---|---|
| | | Applying unit of solvent | Concentration of solid contents of coating liquid film after applying solvent [% by mass] | Concentration of solid contents of coating liquid film during applying solvent [% by mass] | | Wrinkles of uncoated portion | Surface state in both end parts of coating film in width direction | T/C |
| Example A1 | 50 | Bar coating | 35 | 100 | 11 | None | G3 | 0.90 |
| Example A2 | 50 | Bar coating | 50 | 100 | 8 | None | G2 | 0.93 |
| Example A3 | 50 | Spray coating | 35 | 100 | 11 | None | G2 | 0.92 |
| Example A4 | 50 | Spray coating | 50 | 100 | 8 | None | G1 | 0.99 |
| Example A5 | 50 | Spray coating | 50 | 80 | 6 | None | G1 | 0.96 |
| Example A6 | 50 | Spray coating | 50 | 70 | 5 | None | G2 | 0.92 |
| Example A7 | 50 | Spray coating | 60 | 70 | 2 | None | G2 | 0.93 |
| Comparative Example A1 | 50 | None | - | - | -10 | Wrinkled | G1 | 1.0 |

As is clear from Table 1, it was found that, according to the coating film forming method of Examples, in which the slurry for an electrode layer was used as the coating liquid, the creases in the uncoated portion was suppressed.

### Example B1

Two coating films were formed on the base material in the same manner as in Example A1, except that, in Example A1, the coating liquid was changed from the slurry for an electrode layer to the water-based coating liquid (concentration of solid contents: 50% by mass).

In Example B1, using the water-based coating liquid, two coating liquid films were formed in the same manner as in Example A1, and in each of the obtained coating liquid films, a solvent (pure water) contained in the coating liquid was applied on both end parts of the coating liquid film in the width direction, in a case where the concentration of solid contents of the both end parts of the coating liquid film in the width direction was 100% by mass, and was higher than 80% by mass as the concentration of solid contents of the central part of the coating liquid film in the width direction. By applying the pure water, the concentration of solid contents of the both end parts of the coating liquid film in the width direction was set to 50% by mass. In addition, spray coating was used to apply the pure water.

In addition, in the same manner as in Example A1, using a hot air drying mechanism, hot air was blown to the coating liquid films to dry the coating liquid films (step C). In the step C, it was confirmed that the drying points Te were on a downstream side in the transport direction of the base material, compared with the drying point Tc, and "d" was 9 m.

Even in Example B1, no creases occurred in the uncoated portion.

### Example C1

Two coating films were formed on the base material in the same manner as in Example A1, except that, in Example A1, the coating liquid was changed from the slurry for an electrode layer to the PVA aqueous solution (concentration of solid contents: 30% by mass).

In Example C1, using the PVA aqueous solution, two coating liquid films were formed in the same manner as in Example A1, and in each of the obtained coating liquid films, a solvent (pure water) contained in the coating liquid was applied on both end parts of the coating liquid film in the width direction, in a case where the concentration of solid contents of the both end parts of the coating liquid film in the width direction was 100% by mass, and was higher than 80% by mass as the concentration of solid contents of the central part of the coating liquid film in the width direction. By applying the pure water, the concentration of solid contents of the both end parts of the coating liquid film in the width direction was set to 50% by mass. In addition, spray coating was used to apply the pure water.

In addition, in the same manner as in Example A1, using a hot air drying mechanism, hot air was blown to the coating liquid films to dry the coating liquid films (step C). In the step C, it was confirmed that the drying points Te were on a downstream side in the transport direction of the base material, compared with the drying point Tc, and "d" was 13 m.

Even in Example C1, no creases occurred in the uncoated portion.

### Explanation of References

10: long base material
12: coating liquid film
20: coating unit
30, 30a: applying unit
40: drying zone
42: hot air drying mechanism
44, 46: air supply part
R1: roll
R2: roll
Te: drying point at both end parts of coating liquid film in width direction
Tc: drying point at central part of coating liquid film in width direction
Le: straight line which passes through drying point Te and is parallel to width direction of base material
Lc: straight line which passes through drying point Tc and is parallel to width direction of base material
d: distance between drying point Te at both end parts of coating liquid film in width direction and drying point Tc at central part of coating liquid film in width direction
Wb: width of uncoated portion between coating liquid films
X: transport direction of base material
Y: width direction of base material

## Claims

1. A coating film forming method comprising:
a step A of coating a continuously transported base material (10) with a coating liquid to form a plurality of coating liquid films (12) on the base material (10); and
**characterised by**
a step B of, in each of the plurality of coating liquid films (12), applying a solvent contained in the coating liquid on both end parts of a coating liquid film (12) in a width direction in a case where a concentration of solid contents of the both end parts of the coating liquid film (12) in the width direction is higher than a concentration of solid contents of a central part of the coating liquid film (12) in the width direction, so that the concentration of solid contents of the both end parts of the coating liquid film (12) in the width direction is to be equal to or lower than the concentration of solid contents of the central part of the coating liquid film (12) in the width direction,
wherein:
the end parts refer to an inner region up to 5 mm from a width direction edge portion of each coating liquid film (12), and
the central part refers to a region inside the both end parts of each coating liquid film (12) in the width direction.

2. The coating film forming method according to claim 1,
wherein the concentration of solid contents of the both end parts of the coating liquid film (12) in the width direction, after applying the solvent contained in the coating liquid, is 0.8 times or more of a concentration of solid contents of the coating liquid.

3. The coating film forming method according to claim 1 or 2,
wherein, in a case where the concentration of solid contents of the both end parts of the coating liquid film (12) in the width direction reaches 80% by mass to 100% by mass, the solvent contained in the coating liquid is applied on the both end parts of the coating liquid film (12) in the width direction.

4. The coating film forming method according to any one of claims 1 to 3,
wherein the application of the solvent on the both end parts of the coating liquid film (12) in the width direction is performed by spray coating.

5. The coating film forming method according to any one of claims 1 to 4, further comprising:
a step C of drying the coating liquid films (12) in a state in which, in each of the plurality of coating liquid films (12), drying points Te at the both end parts of the coating liquid film (12) in the width direction are on a downstream side in a transport direction of the base material (10), compared with a drying point Tc at the central part of the coating liquid film (12) in the width direction,
wherein the drying point refers to a point at which the coating liquid film shifts from a constant rate drying period to a reduced rate drying period, the constant rate drying period being a period during which a temperature change of the film surface temperature is within ± 5°C, and the reduced rate drying period being a period during which the film surface temperature rises after the constant rate drying period.

6. The coating film forming method according to any one of claims 1 to 5,
wherein the coating liquid is a slurry containing an electrode active material and a conductive auxiliary agent.

7. The coating film forming method according to claim 6,
wherein, in a case where a color density of both end parts of a coating film in a width direction is represented by T and a color density of a central part of the coating film in the width direction is represented by C, a relationship of 0.9 ≤ T/C is satisfied,
wherein the color densities T and C of the coating film are measured as follows:
an L* value measured with a densitometer is used as the color density in the coating film (12), and
L* values are measured at any 5 points of each of the both end parts of the coating film (12) in the width direction and the central part of the coating film (12) in the width direction, and the arithmetic average value thereof is used as the color density at the both end parts of the coating film (12) in the width direction and the color density at the central part of the coating film (12) in the width direction.

8. The coating film forming method according to claim 7,
wherein, in a case where a color density of both end parts of a coating film in a width direction is represented by T and a color density of a central part of the coating film in the width direction is represented by C, a relationship of 0.9 ≤ T/C ≤1.0 is satisfied.

9. The coating film forming method according to any one of claims 1 to 8,
wherein the base material (10) is a base material having a thermal conductivity of 200 W/m·K or more.

10. The coating film forming method according to claim 9,
wherein the base material (10) is a base material having a thermal conductivity of 200 W/m·K to 500 W/m·K.

## Patentansprüche

1. Beschichtungsfilm-Bildungsverfahren, umfassend:
einen Schritt A des Beschichtens eines kontinuierlich transportierten Basismaterials (10) mit einer Beschichtungsflüssigkeit, um mehrere Beschichtungsflüssigkeitsfilme (12) auf dem Basismaterial (10) zu bilden; und
**gekennzeichnet durch**
einen Schritt B des, bei jedem der mehreren Beschichtungsflüssigkeitsfilme (12),
Aufbringens eines Lösungsmittels, das in der Beschichtungsflüssigkeit enthalten ist,
auf beide Endteile eines Beschichtungsflüssigkeitsfilms (12) in einer Breitenrichtung in einem Fall, in dem eine Konzentration von Feststoffgehalten der beiden Endteile des Beschichtungsflüssigkeitsfilms (12) in der Breitenrichtung höher als eine Konzentration von Feststoffgehalten eines mittleren Teils des Beschichtungsflüssigkeitsfilms (12) in der Breitenrichtung ist, so dass die Konzentration von Feststoffgehalten der beiden Endteile des Beschichtungsflüssigkeitsfilms (12) in der Breitenrichtung gleich oder niedriger als die Konzentration von Feststoffgehalten des mittleren Teils des Beschichtungsflüssigkeitsfilms (12) in der Breitenrichtung ist,
wobei:
die Endteile auf einen Innenbereich bis zu 5 mm von einem Randabschnitt in Breitenrichtung jedes Beschichtungsflüssigkeitsfilms (12) beziehen, und
der mittlere Teil sich auf einen Bereich innerhalb der beiden Endteile jedes Beschichtungsflüssigkeitsfilms (12) in der Breitenrichtung bezieht.

2. Beschichtungsfilm-Bildungsverfahren nach Anspruch 1,
wobei die Konzentration von Feststoffgehalten der beiden Endteile des Beschichtungsflüssigkeitsfilms (12) in der Breitenrichtung nach Aufbringen des in der Beschichtungsflüssigkeit enthaltenen Lösungsmittels das 0,8-fache oder mehr einer Konzentration von Feststoffgehalten der Beschichtungsflüssigkeit beträgt.

3. Beschichtungsfilm-Bildungsverfahren nach Anspruch 1 oder 2,
wobei in einem Fall, in dem die Konzentration von Feststoffgehalten der beiden Endteile des Beschichtungsflüssigkeitsfilms (12) in der Breitenrichtung 80 Massen-% bis 100 Massen-% erreicht, das in der Beschichtungsflüssigkeit enthaltene Lösungsmittel auf die beiden Endteile des Beschichtungsflüssigkeitsfilms (12) in der Breitenrichtung aufgetragen wird.

4. Beschichtungsfilm-Bildungsverfahren nach einem der Ansprüche 1 bis 3,
wobei die Aufbringung des Lösungsmittels auf die beiden Endteile des Beschichtungsflüssigkeitsfilms (12) in der Breitenrichtung durch Sprühbeschichtung durchgeführt wird.

5. Beschichtungsfilm-Bildungsverfahren nach einem der Ansprüche 1 bis 4, ferner umfassend:
einen Schritt C des Trocknens der Beschichtungsflüssigkeitsfilme (12) in einem Zustand, in dem bei jedem der mehreren Beschichtungsflüssigkeitsfilme (12) Trocknungspunkte Te an den beiden Endteilen des Beschichtungsflüssigkeitsfilms (12) in der Breitenrichtung auf einer Stromabwärtsseite in einer Transportrichtung des Basismaterials (10) im Vergleich zu einem Trocknungspunkt Tc an dem mittleren Teil des Beschichtungsflüssigkeitsfilms (12) in der Breitenrichtung liegen,
wobei der Trocknungspunkt sich auf einen Punkt bezieht, an dem der Beschichtungsflüssigkeitsfilm von einem Trocknungszeitraum mit konstanter Rate zu einem Trocknungszeitraum mit reduzierter Rate übergeht, wobei der Trocknungszeitraum mit konstanter Rate ein Zeitraum ist, während dessen eine Temperaturänderung der Filmoberflächentemperatur innerhalb von ±5°C liegt, und der Trocknungszeitraum mit reduzierter Rate ein Zeitraum ist, während dessen die Filmoberflächentemperatur nach dem Trocknungszeitraum mit konstanter Rate ansteigt.

6. Beschichtungsfilm-Bildungsverfahren nach einem der Ansprüche 1 bis 5,
wobei die Beschichtungsflüssigkeit eine Aufschlämmung ist, die ein elektrodenaktives Material und ein leitfähiges Hilfsmittel enthält.

7. Beschichtungsfilm-Bildungsverfahren nach Anspruch 6,
wobei in einem Fall, in dem eine Farbdichte von beiden Endteilen eines Beschichtungsfilms in einer Breitenrichtung durch T dargestellt wird und eine Farbdichte eines mittleren Teils des Beschichtungsfilms in der Breitenrichtung durch C dargestellt wird, eine Beziehung von 0,9 ≤ T/C erfüllt ist,
wobei die Farbdichten T und C des Beschichtungsfilms wie folgt gemessen werden:
ein L*-Wert, der mit einem Densitometer gemessen wird, als die Farbdichte bei dem Beschichtungsfilm (12) verwendet wird, und
L*-Werte an beliebigen 5 Punkten jedes der beiden Endteile des Beschichtungsfilms (12) in der Breitenrichtung und des mittleren Teils des Beschichtungsfilms (12) in der Breitenrichtung gemessen werden und der arithmetische Mittelwert davon als die Farbdichte an den beiden Endteilen des Beschichtungsfilms (12) in der Breitenrichtung und die Farbdichte an dem mittleren Teil des Beschichtungsfilms (12) in der Breitenrichtung verwendet wird.

8. Beschichtungsfilm-Bildungsverfahren nach Anspruch 7,
wobei in einem Fall, in dem eine Farbdichte von beiden Endteilen eines Beschichtungsfilms in einer Breitenrichtung durch T dargestellt wird und eine Farbdichte eines mittleren Teils des Beschichtungsfilms in der Breitenrichtung durch C dargestellt wird, eine Beziehung von 0,9 ≤ T/C ≤ 1,0 erfüllt ist.

9. Beschichtungsfilm-Bildungsverfahren nach einem der Ansprüche 1 bis 8,
wobei das Basismaterial (10) ein Basismaterial mit einer Wärmeleitfähigkeit von 200 W/m·K oder mehr ist.

10. Beschichtungsfilm-Bildungsverfahren nach Anspruch 9,
wobei das Basismaterial (10) ein Basismaterial mit einer Wärmeleitfähigkeit von 200 W/m·K bis 500 W/m·K ist.

## Revendications

1. Procédé de formation de film de revêtement comprenant :
une étape A consistant à revêtir un matériau de base (10) transporté en continu avec un liquide de revêtement pour former une pluralité de films de liquide de revêtement (12) sur le matériau de base (10) ; et
**caractérisé par**
une étape B consistant, dans chacun de la pluralité de films de liquide de revêtement (12), à appliquer un solvant contenu dans le liquide de revêtement sur les deux parties d'extrémité d'un film liquide de revêtement (12) dans une direction de largeur dans un cas où une concentration de contenu solide des deux parties d'extrémité du film liquide de revêtement (12) dans la direction de largeur est supérieure à une concentration de contenu solide d'une partie centrale du film liquide de revêtement (12) dans la direction de largeur, de sorte que la concentration de contenu solide des deux parties d'extrémité du film liquide de revêtement (12) dans la direction de largeur soit égale ou inférieure à la concentration de contenu solide de la partie centrale du film liquide de revêtement (12) dans la direction de largeur,
dans lequel :
les parties d'extrémité se réfèrent à une région intérieure jusqu'à 5 mm à partir d'une partie de bord dans la direction de largeur de chaque film de liquide de revêtement (12), et
la partie centrale se réfère à une région à l'intérieur des deux parties d'extrémité de chaque film de liquide de revêtement (12) dans la direction de largeur.

2. Procédé de formation de film de revêtement selon la revendication 1,
dans lequel la concentration de contenu solide des deux parties d'extrémité du film liquide de revêtement (12) dans la direction de largeur, après application du solvant contenu dans le liquide de revêtement, est 0,8 fois ou plus de la concentration de contenu solide du liquide de revêtement.

3. Procédé de formation de film de revêtement selon la revendication 1 ou la revendication 2,
dans lequel, dans un cas où la concentration de contenu solide des deux parties d'extrémité du film liquide de revêtement (12) dans la direction de largeur atteint 80 % en masse à 100 % en masse, le solvant contenu dans le liquide de revêtement est appliqué sur les deux parties d'extrémité du film liquide de revêtement (12) dans la direction de largeur.

4. Procédé de formation de film de revêtement selon l'une quelconque des revendications 1 à 3,
dans lequel l'application du solvant sur les deux parties d'extrémité du film liquide de revêtement (12) dans la direction de largeur est effectuée par revêtement par pulvérisation.

5. Procédé de formation de film de revêtement selon l'une quelconque des revendications 1 à 4, comprenant en outre :
une étape C de séchage des films de liquide de revêtement (12) dans un état où, dans chacun de la pluralité de films de liquide de revêtement (12), points de séchage Te aux deux parties d'extrémité du film de liquide de revêtement (12) dans la direction de largeur sont sur un côté aval dans une direction de transport du matériau de base (10), par rapport à un point de séchage Tc à la partie centrale du film de liquide de revêtement (12) dans la direction de largeur,
dans lequel le point de séchage se réfère à un point auquel le film de liquide de revêtement passe d'une période de séchage à taux constant à une période de séchage à taux réduit, la période de séchage à taux constant étant une période pendant laquelle un changement de température de la surface du film est dans une plage de ±5 °C, et la période de séchage à taux réduit étant une période pendant laquelle la température de la surface du film augmente après la période de séchage à taux constant.

6. Procédé de formation de film de revêtement selon l'une quelconque des revendications 1 à 5,
dans lequel le liquide de revêtement est une suspension contenant un matériau actif d'électrode et un agent auxiliaire conducteur.

7. Procédé de formation de film de revêtement selon la revendication 6,
dans lequel, dans un cas où une densité de couleur des deux parties d'extrémité d'un film de revêtement dans une direction de largeur est représentée par T et une densité de couleur d'une partie centrale du film de revêtement dans la direction de largeur est représentée par C, une relation de 0,9 ≤ T/C est satisfaite,
dans lequel les densités de couleur T et C du film de revêtement sont mesurées comme suit :
une valeur L* mesurée avec un densitomètre est utilisée comme densité de couleur dans le film de revêtement (12), et
les valeurs L* sont mesurées en 5 points quelconques de chacune des deux parties d'extrémité du film de revêtement (12) dans la direction de largeur et de la partie centrale du film de revêtement (12) dans la direction de largeur, et la valeur moyenne arithmétique de celles-ci est utilisée comme densité de couleur aux deux parties d'extrémité du film de revêtement (12) dans la direction de largeur et comme densité de couleur à la partie centrale du film de revêtement (12) dans la direction de largeur.

8. Procédé de formation de film de revêtement selon la revendication 7,
dans lequel, dans un cas où une densité de couleur des deux parties d'extrémité d'un film de revêtement dans la direction de largeur est représentée par T et une densité de couleur d'une partie centrale du film de revêtement dans la direction de largeur est représentée par C, une relation de 0,9 ≤ T/C ≤ 1,0 est satisfaite.

9. Procédé de formation de film de revêtement selon l'une quelconque des revendications 1 à 8,
dans lequel le matériau de base (10) est un matériau de base ayant une conductivité thermique de 200 W/m·K ou plus.

10. Procédé de formation de film de revêtement selon la revendication 9,
dans lequel le matériau de base (10) est un matériau de base ayant une conductivité thermique de 200 W/m·K à 500 W/m·K.
